# EUROPÄISCHE PATENTSCHRIFT

(11) **EP 0 950 936 B1**
(45) Veröffentlichungstag und Bekanntmachung des Hinweises auf die Patenterteilung: **28.07.2010**
(21) Anmeldenummer: 99105564.1
(22) Anmeldetag: 18.03.1999
(51) Int. Cl.: G05B 19/042, G05B 19/05

(54) **Elektrische, modulare und konfigurierbare Steuereinrichtung**
Modular and configurable electrical control device
Dispositif de commande électrique modulaire et configurable

(30) Priorität: 15.04.1998 US 60787
(43) Veröffentlichungstag der Anmeldung: 20.10.1999
(73) Patentinhaber: Infineon Technologies AG, 85579 Neubiberg (DE)
(72) Erfinder: Rohm, Peter, 85276 Pfaffenhofen (DE); Leteinturier, Patrick, 81739 München (DE)
(74) Vertreter: Jannig, Peter

(56) Entgegenhaltungen:
- EP-A- 0 333 057
- EP-A- 0 603 560
- EP-A- 0 624 832
- EP-B- 0 550 939
- EP-B- 0 608 245
- US- - 5 252 899

## Beschreibung

Die vorliegende Erfindung betrifft eine Vorrichtung gemäß dem Oberbegriff des Patentanspruchs 1, d.h. eine elektrische Steuereinrichtung zur Erzeugung von Steuersignalen für die Ansteuerung elektrischer Einrichtungen.

Derartige elektrische Steuereinrichtungen sind in unzähligen Ausführungsformen bekannt und werden für die unterschiedlichsten Zwecke verwendet (wie z.B. in den Druckschriften US5252899 und EP0333057A2).

Der Aufbau der elektrischen Steuereinrichtung hängt sehr stark davon ab, welche Einrichtung in Abhängigkeit von welchen Ereignissen oder Parametern gesteuert werden soll. Dies hat zur Folge, daß die Einsatzmöglichkeiten einer jeweiligen elektrischen Steuereinrichtung relativ begrenzt sind, was zweifellos ein Nachteil der bekannten Steuereinrichtungen ist.

Der vorliegenden Erfindung liegt daher die Aufgabe zugrunde, eine elektrische Steuereinrichtung zu schaffen, die bei einfachem Aufbau vielseitig einsetzbar ist.

Diese Aufgabe wird erfindungsgemäß durch die im kennzeichnenden Teil des Patentanspruchs 1 beanspruchten Merkmale gelöst.

Demnach ist vorgesehen, daß die Steuersignale von in einer großen Anzahl vorhandenen, hinsichtlich deren Zusammenwirkens konfigurierbaren Steuer-Modulen erzeugt werden.

Die individuelle Einstellbarkeit des Zusammenwirkens der Steuer-Module ermöglicht es, daß die Steuereinrichtung für die unterschiedlichsten Steueraufgaben konfigurierbar, also äußerst vielseitig einsetzbar ist. Der hierfür zu treibende Aufwand ist dabei nicht größer als es bei herkömmlichen Steuereinrichtungen mit vergleichbarer Leistungsfähigkeit der Fall ist.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Zeichnung näher erläutert. Es zeigen
- Figur 1: ein Ausführungsbeispiel der erfindungsgemäßen Steuer- einrichtung, und
- Figur 2: den Aufbau eines der in der Steuereinrichtung gemäß Figur 1 enthaltenen Steuer-Module 12.

Die vorliegend näher betrachtete elektrische Steuereinrichtung ist Bestandteil einer integrierten Schaltung, beispielsweise eines Controllers für den automotiven und/oder industriellen Bereich. Es sei jedoch bereits an dieser Stelle darauf hingewiesen, daß hierauf keine Einschränkung besteht; bei der Steuereinrichtung kann es sich auch um eine unter Verwendung diskreter Elemente aufgebaute Schaltung handeln.

Die Steuereinrichtung ist im vorliegend betrachteten Beispiel dazu ausgelegt, über deren Ausgabeanschlüsse periodische oder nicht periodische Steuersignale zur Ansteuerung beliebiger elektrischer Einrichtungen auszugeben, wobei die ausgegebenen Steuersignale insbesondere (aber nicht unbedingt ausschließlich) unter Berücksichtigung externer Ereignisse, genauer gesagt unter Berücksichtigung von diese Ereignisse repräsentierenden, über die Eingangsanschlüsse der Steuereinrichtung eingegebenen Eingangssignalen erzeugt werden.

Bei der beschriebenen Steuereinrichtung handelt es sich um eine digitale Steuereinrichtung, die in der Lage ist, in den empfangenen Signalen steigende und/oder fallende Flanken und die Zeitpunkte des Auftretens derselben zu erfassen und insbesondere in Abhängigkeit hiervon einzelne steigende oder fallende Flanken in den ausgegebenen Steuersignalen zu erzeugen und/oder periodische Steuersignale zu erzeugen und auszugeben.

Selbstverständlich kann die Steuereinrichtung zusätzlich oder alternativ dazu ausgelegt sein, unter Berücksichtigung der selben oder beliebiger anderer Ereignisse oder Parameter wie erwähnt oder anders zu reagieren.

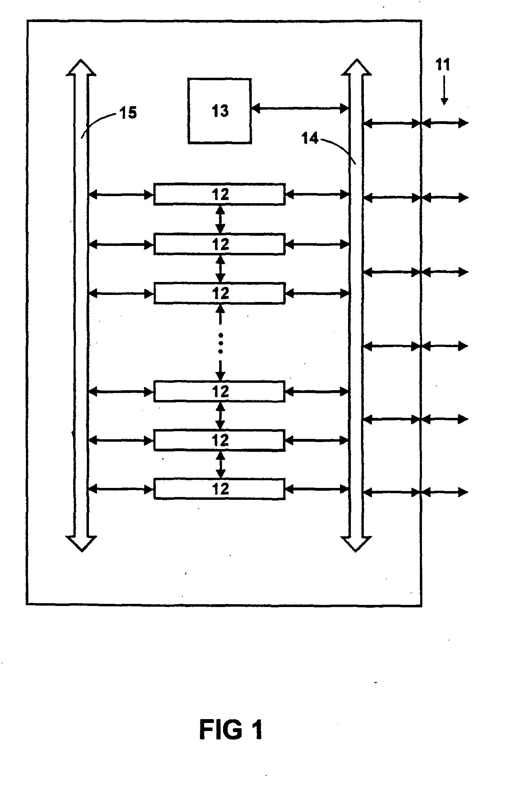

Die nachfolgend näher betrachtete Steuereinrichtung (genauer gesagt die vorliegend interessierenden Bestandteile derselben) ist schematisch in Figur 1 gezeigt.

Sie weist eine Vielzahl von Ein- und/oder Ausgabeanschlüssen 11, eine Vielzahl von nachfolgend noch näher beschriebenen Steuer-Modulen 12, eine nachfolgend ebenfalls noch näher beschriebene Einstelleinrichtung 13 sowie gegebenenfalls weitere, in der Figur 1 nicht gezeigte Einrichtungen auf.

Den Steuer-Modulen 12 obliegt es, die von der Steuereinrichtung auszugebenden Steuersignale zu erzeugen und den Ein- und/oder Ausgabeanschlüssen 11 der Steuereinrichtung zuzuführen; hierzu ist jedes einzelne der Steuer-Module 12 in der Lage.

Bei den Steuer-Modulen 12 handelt es sich um im wesentlichen identische Steuer-Module, die untereinander in Reihe verschaltet sind und über einen ersten Bus 14 mit den Ein- und/oder Ausgabeanschlüssen 11 und der Einstelleinrichtung 13 verbunden sind und über einen zweiten Bus 15 mit einem in den Figuren nicht gezeigten Taktgenerator verbunden sind; zwischen den Steuer-Modulen 12 und den Ein- und/oder Ausgabeanschlüssen 11 kann eine feste oder eine variable (einstellbare bzw. veränderliche) Zuordnung bestehen, wobei nicht jedes Steuer-Modul 12 mit einem Ein- und/oder Ausgabeanschluß 11 verbunden sein muß, und wobei andererseits auch vorgesehen werden kann, einem Steuer-Modul 12 mehrere Ein- und/oder Ausgabeanschlüsse 11 zuzuordnen.

Die einzelnen Steuer-Module sind wahlweise einzeln oder gruppenweise zusammenwirkend betreibbar, wobei die einzelnen Steuer-Modul-Gruppen unabhängig voneinander beliebig viele Steuer-Module umfassen können.

Ob und gegebenenfalls welche Steuer-Module wie zusammenwirkend betrieben werden, und welche Steuer-Module welchen Ein- und/oder Ausgabeanschlüssen zugeordnet werden, ist durch die Einstelleinrichtung 13 einstellbar.

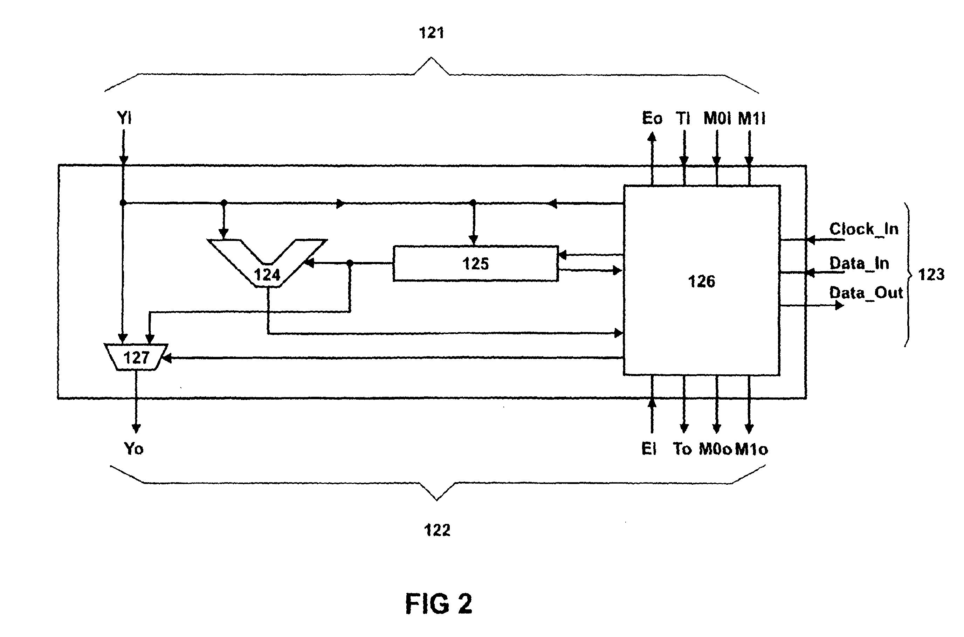

Der Aufbau eines einzelnen Steuer-Moduls 12 ist in Figur 2 gezeigt.

Wie aus der Figur 2 ersichtlich ist, weist das dort gezeigte Steuer-Modul 12 erste Ein- und/oder Ausgabeanschlüsse 121, zweite Ein- und/oder Ausgabeanschlüsse 122, und dritte Ein- und/oder Ausgabeanschlüsse 123 auf, wobei die ersten Ein- und/oder Ausgabeanschlüsse 121 zur Verbindung mit dem in der Steuer-Modul-Reihenschaltung vor dem betreffenden Steuer-Modul angeordneten Steuer-Modul dienen, die zweiten Ein- und/oder Ausgabeanschlüsse 122 zur Verbindung mit dem in der Steuer-Modul-Reihenschaltung nach dem betreffenden Steuer-Modul angeordneten Steuer-Modul dienen, und die dritten Ein- und/oder Ausgabeanschlüsse 123 zu der über die Bus 14 und 15 erfolgenden Verbindung mit den Ein- und/oder Ausgabeanschlüssen 11, der Einstelleinrichtung 13 und dem Taktgenerator dienen.

Die ersten Ein- und/oder Ausgabeanschlüsse 121 umfassen im betrachteten Beispiel einen mit dem Bezugszeichen Eo bezeichneten Ausgabeanschluß und vier mit den Bezugszeichen Yi, Ti, M0i und M1i bezeichnete Eingabeanschlüsse. Die zweiten Ein- und/oder Ausgabeanschlüsse 122 umfassen im betrachteten Beispiel vier mit den Bezugszeichen Yo, To, M0o und M1o bezeichnete Ausgabeanschlüsse und einen mit dem Bezugszeichen Ei bezeichneten Eingabeanschluß. Die dritten Ein- und/oder Ausgabeanschlüsse 123 umfassen im betrachteten Beispiel einen mit dem Bezugszeichen Data_Out bezeichneten Ausgabeanschluß und zwei mit den Bezugszeichen Data_In und Clock_In bezeichnete Eingabeanschlüsse. Die einzelnen Ein- und/oder Ausgabeanschlüsse sind, obgleich dies nicht explizit erwähnt ist, teilweise aus mehreren Ein- und/oder Ausgabeanschlüssen bestehende Ein- und/oder Ausgabeanschluß-Gruppen. Bei hintereinandergeschalteten Steuer-Modulen sind die Anschlüsse Yi und Yo, Ei und Eo, Ti und To, M0i und M0o, sowie M1i und M1o miteinander verbunden.

Die Steuer-Module 12 sind dazu ausgelegt, auf bestimmte interne und/oder externe Ereignisse in vorbestimmter Weise zu reagieren und die Reaktion repräsentierende Signale oder Daten über die ersten Ein- und/oder Ausgabeanschlüsse 121 und/oder die zweiten Ein- und/oder Ausgabeanschlüsse 122 und/oder die dritten Ein- und/oder Ausgabeanschlüsse 123 auszugeben.

Bei den Steuer-Modulen handelt sich im betrachteten Beispiel um Multifunktions-Module, die entsprechend deren Ansteuerung durch die Einstelleinrichtung 13, verschiedenartig, genauer gesagt wahlweise als Zähler, Flankendetektor oder Vergleicher betreibbar sind.

Wie aus der Figur 2 ersichtlich ist, enthalten die Steuer-Module 12 jeweils einen Vergleicher 124, ein Register 125, eine Steuereinheit 126 und einen Multiplexer 127, welche wie gezeigt verschaltet sind.

Wie die jeweiligen Steuer-Module betrieben werden, d.h. ob als Zähler, als Flankendetektor oder als Vergleicher und gegebenenfalls auch wie die jeweiligen Steuer-Module auf bestimmte Ereignisse reagieren, wird den jeweiligen Steuer-Modulen von der Einstelleinrichtung 13 über den ersten Bus 14 und einen oder mehrere der Eingabeanschlüsse Data_In befohlen.

Bei Verwendung des Steuer-Moduls 12 als Zähler wird der im Register 125 gespeicherte Zählwert unter Steuerung durch die Steuereinheit 126
- entsprechend dem Takt des dem Steuer-Modul vom Taktgenerator über den zweiten Bus 15 und den Eingabeanschluß Clock_In zugeführten Taktsignals oder
- mit der steigenden Flanke, der fallenden Flanke oder beiden Flanken des über den dem betreffenden Steuer-Modul zugeordneten Ein- und/oder Ausgabeanschluß der Steuereinrichtung eingegebenen Signals
erhöht, wobei der Zähler im Ansprechen auf ein Signal, das dem betreffenden Steuer-Modul von dem in der Steuer-Modul-Reihe nach diesem angeordneten Steuer-Modul über den Eingabeanschluß Ei zugeführt wird, zurückgesetzt werden kann. Der aktuelle Zählerstand kann über den Ausgangsanschluß Yo ausgegeben werden; Veränderungen des Zählerstandes können über den Ausgangsanschluß To signalisiert werden. Wenn der Zähler den Zählstand Null erreicht, werden im betreffenden Steuer-Modul interne Vorgänge ausgelöst und/oder dieses Ereignis repräsentierende Signale oder Daten erzeugt und über die ersten Ein- und/oder Ausgabeanschlüsse 121 und/oder über die zweiten Ein- und/oder Ausgabeanschlüsse 122 und/oder über die dritten Ein- und/oder Ausgabeanschlüsse 123 ausgegeben. Sofern die Steuer-Module und/oder die Steuereinrichtung programmgesteuert sind, kann zusätzlich oder alternativ vorgesehen werden, einen Interrupt oder ein sonstiges Software-Ereignis auszulösen.

Bei Verwendung des Steuer-Moduls 12 als Flankendetektor werden durch die Steuereinheit die steigende, die fallende oder beide Flanken
- des Signals, das der Steuereinrichtung über den dem betreffenden Steuer-Modul zugeordneten Ein- und/oder Ausgabeanschluß der Steuereinrichtung zugeführt wird, und/oder
- des dem dem Steuer-Modul vom Taktgenerator über den zweiten Bus 15 und den Eingabeanschluß Clock_In zugeführten Taktsignals
detektiert. Wenn in den genannten Signalen eine zu detektierende Flanke erfaßt wird, werden im betreffenden Steuer-Modul interne Vorgänge ausgelöst und/oder dieses Ereignis repräsentierende Signale oder Daten erzeugt und über die ersten Ein- und/oder Ausgabeanschlüsse 121 und/oder über die zweiten Ein- und/oder Ausgabeanschlüsse 122 und/oder über die dritten Ein- und/oder Ausgabeanschlüsse 123 ausgegeben. Die Reaktion auf das Erkennen einer Flanke kann insbesondere darin bestehen, daß der über den Eingangsanschluß Yi erhaltene Wert im Register 125 gespeichert wird; dies ist die sogenannte Capture-Funktion. Sofern die Steuer-Module und/oder die Steuereinrichtung programmgesteuert sind, kann zusätzlich oder alternativ vorgesehen werden, einen Interrupt oder ein sonstiges Software-Ereignis auszulösen.

Bei Verwendung des Steuer-Moduls 12 als Vergleicher werden unter Steuerung durch die Steuereinheit 126 zwei Werte, von welchen einer der über den Eingangsanschluß Yi zugeführte Zählstand eines in der Steuer-Modul-Reihe weiter vorn angeordneten Zählers (genauer gesagt der Zählstand eines als Zähler verwendeten Steuer-Moduls) ist, auf Gleichheit überprüft. Wenn die verglichenen Werte gleich sind, werden im betreffenden Steuer-Modul interne Vorgänge ausgelöst und/oder dieses Ereignis repräsentierende Signale oder Daten erzeugt und über die ersten Ein- und/oder Ausgabeanschlüsse 121 und/oder über die zweiten Ein- und/oder Ausgabeanschlüsse 122 und/oder über die dritten Ein- und/oder Ausgabeanschlüsse 123 ausgegeben. Sofern die Steuer-Module und/oder die Steuereinrichtung programmgesteuert sind, kann zusätzlich oder alternativ vorgesehen werden, einen Interrupt oder ein sonstiges Software-Ereignis auszulösen. Der Vergleich wird im betrachteten Beispiel immer nur dann ausgewertet, wenn sich der Inhalt des Registers 125 ändert oder dem betreffenden Steuer-modul über den Eingabeanschluß Ti signalisiert wird, daß sich der über den Eingabeanschluß Yi erhaltene Wert geändert hat; damit wird erreicht, daß auch dann, wenn die Gleichheitsbedingung über mehrere Perioden des Operationstaktes der Steuereinheit fortbesteht, auf jedes Vergleichsergebnis nur ein einziges Mal reagiert wird.

Im vorliegend betrachteten Beispiel verhalten sich die Steuer-Module im einzelnen wie folgt:
- Beim Auftreten eines der vorstehend beschriebenen Ereignisse kann (außer bei der Capture-Funktion) am zugeordneten Ausgabeanschluß der Steuereinrichtung eine steigende oder fallende Flanke erzeugt werden oder der Zustand des über den zugeordneten Ausgabeanschluß der Steuereinrichtung ausgegebenen Signals invertiert werden oder dem nächsten Steuer-Modul über die Ausgabeanschlüsse M0o und/oder M1o ein entsprechendes Kommando übermittelt werden.
- Ein Steuer-Modul, das diese oder andere Kommandos über seine Eingangsanschlüsse M0i und/oder M1i empfängt, kann diese entweder selbst verarbeiten oder über die Ausgabeanschlüsse M0o und/oder M1o zum nächsten Steuer-Modul weiterleiten.
- Wenn ein Steuer-Modul über seine Eingabeanschlüsse M0i und/oder M1i ein Kommande empfängt und gleichzeitig auf ein selbst erfaßtes Ereignis reagieren muß, hat die im Ansprechen auf das betreffende Ereignis durchzuführende Reaktion in Konfliktfällen Vorrang vor der Ausführung und/oder Weiterleitung des empfangenen Kommandos.

Die einzelnen Steuer-Module 12 selbst, deren Zusammenwirken und deren Zuordnung zu den einzelnen Ein- und/oder Ausgabeanschlüssen 11 der Steuereinrichtung sind, wie vorstehend bereits erwähnt wurde, durch die Einstelleinrichtung 13 unabhängig voneinander individuell konfigurierbar (einstellbar). Im betrachteten Beispiel erfolgt die Konfiguration während des Betriebes der Steuereinrichtung durch Setzen bestimmter Steuerregister.

Dadurch kann eine beliebige Anzahl von wunschgemäß auf definierte Ereignisse reagierenden Steuer-Modulen unter einseitiger oder gegenseitiger Einflußnahme wunschgemäß zusammenwirken und bestimmten Ein- und/oder Ausgabeanschlüssen der Steuereinrichtung zugeordnet werden. Ein derart flexible Konfigurierbarkeit ermöglicht es, die Steuereinrichtung für die unterschiedlichsten Aufgaben einzusetzen und sie dabei mit minimalem Aufwand jeweils optimal an die jeweiligen Verhältnisse anzupassen.

Obgleich es derzeit als optimal angesehen wird, die Steuereinrichtung wie beschrieben oder ähnlich aufzubauen, ist diese in vielfacher Hinsicht variierbar.

So ist es beispielsweise nicht unbedingt erforderlich, daß es sich bei den Steuer-Modulen 12 um im wesentlichen identische Steuer-Module handelt; es kann sich auch nur teilweise um identische Steuer-Module oder gar um lauter verschiedene Steuer-Module handeln.

Sofern die Steuer-Module 12 wie vorliegend Multifunktions-Module sind, sind deren mögliche Funktionen nicht auf Zähl-, Vergleichs- und Flankendetektorfunktionen beschränkt; die Steuer-Module können dazu ausgelegt sein, zusätzlich oder alternativ beliebige andere Funktionen zu übernehmen.

Bei den Steuer-Modulen muß es sich aber nicht um Multifunktions-Module handeln, deren Funktion und Arbeitsweise individuell konfigurierbar ist. Es können statt dessen zumindest teilweise auch Steuer-Module mit fester (unveränderlicher) Funktion zum Einsatz kommen. Es ist auch möglich, zur Steuerung benötigte Funktionen wie beispielsweise die Zählfunktion aus den Steuer-Modulen auszugliedern und statt dessen für mehrere oder alle Steuer-Module gemeinsame (globale) Einrichtungen vorzusehen und deren Ausgangssignale oder -daten einzelnen oder allen Steuer-Modulen verfügbar zu machen.

Die Steuer-Module müssen auch nicht in Reihe verschaltet sein; es kann auch vorgesehen werden, die Steuer-Module beliebig anders zu verschalten. Die Verbindungen zwischen den Steuer-Modulen müssen auch keine festen Verbindungen sein; es kann vorgesehen werden, die Verbindungen zwischen den Steuer-Modulen beispielsweise unter Steuerung durch die Einstelleinrichtung 13 mehr oder weniger frei konfigurierbar zu machen, wodurch im Idealfall jedes Steuer-Modul auf beliebige Art und Weise mit beliebigen andern Steuer-Modulen verschaltbar ist.

Es wäre auch denkbar, die Steuereinrichtung beispielsweise durch Zünden entsprechender Fuses oder dergleichen dauerhaft wunschgemäß zu konfigurieren.

Unabhängig von den Einzelheiten der praktischen Realisierung der Steuereinrichtung ist diese bei einfachem Aufbau vielfältig einsetzbar und dabei mit minimalem Aufwand jeweils optimal an die gegebenen Verhältnisse anpaßbar.

## Patentansprüche

1. Elektrische Steuereinrichtung zur Erzeugung von Steuersignalen für die Ansteuerung elektrischer Einrichtungen,
- wobei die Steuereinrichtung eine Vielzahl von Steuer-Modulen (12) enthält, von welchen jedes eine der durch die Steuereinrichtung anzusteuernden elektrischen Einrichtungen ansteuern kann, und
- wobei eine Einstelleinrichtung (13) vorgesehen ist, durch welche durch die Ausgabe entsprechender Steuerdaten eingestellt wird,
- welche elektrische Einrichtung durch welches Steuer-Modul angesteuert wird, und
- ob und gegebenenfalls welche Steuer-Module zur Ansteuerung einer jeweiligen elektrischen Einrichtung wie zusammenarbeiten,
**dadurch gekennzeichnet,**
- **daß** die Steuereinrichtung Bestandteil einer integrierten Schaltung ist, und
- **daß** die Steuer-Module (12) Multifunktions-Module sind, die unabhängig voneinander wahlweise in einer von mehreren Betriebsarten arbeiten können, wobei die mehreren Betriebsarten eine Betriebsart umfassen, in welcher die Steuer-Module als Zähler verwendet werden, und/oder eine Betriebsart umfassen, in welcher die Steuer-Module (12) als Vergleicher verwendet werden, und/oder eine Betriebsart umfassen, in welcher die Steuer-Module (12) als Flankendetektor verwendet werden, und/oder eine Betriebsart umfassen, in welcher die Steuer-Module (12) als Capture-Einheit verwendet werden.

2. Steuereinrichtung nach Anspruch 1,
**dadurch gekennzeichnet,**
**daß** die Steuer-Module (12) dazu ausgelegt sind, im Ansprechen auf bestimmte Ereignisse in vorbestimmter Weise zu reagieren und die Reaktion repräsentierende Daten oder Signale an andere Steuer-Module und/oder als Steuersignal zur Ansteuerung einer elektrischen Einrichtung aus der Steuereinrichtung auszugeben.

3. Steuereinrichtung nach einem der vorhergehenden Ansprüche,
**dadurch gekennzeichnet,**
**daß** die Steuereinrichtung eine Vielzahl von Ein- und/oder Ausgabeanschlüssen aufweist, und daß durch die Einstelleinrichtung (13) einstellbar ist, welcher Steuer-Module mit welchen Ein- und/oder Ausgabeanschlüssen (11) verbunden sind.

4. Steuereinrichtung nach einem der vorhergehenden Ansprüche,
**dadurch gekennzeichnet,**
**daß** die Einstelleinrichtung (13) dazu ausgelegt ist, die Einstellungen individuell während des Betriebes der Steuereinrichtung vorzunehmen.

5. Steuereinrichtung nach einem der vorhergehenden Ansprüche,
**dadurch gekennzeichnet,**
**daß** die Steuer-Module (12) in Reihe zu einer Steuer-Modul-Reihe verschaltet sind.

6. Steuereinrichtung nach Anspruch 5,
**dadurch gekennzeichnet,**
**daß** die Steuer-Module (12) dazu ausgelegt sind, dem in der Steuer-Modul-Reihe jeweils vor ihnen stehenden Steuer-Modul (12) und/oder dem in der Steuer-Modul-Reihe jeweils hinter ihnen stehenden Steuer-Modul Daten oder Signale zuzuführen.

7. Steuereinrichtung nach einem der vorhergehenden Ansprüche,
**dadurch gekennzeichnet,**
**daß** die Steuer-Module (12) dazu ausgelegt sind, von einem Steuer-Modul erhaltene Daten oder Signale an andere Steuer-Module weiterzuleiten.

8. Steuereinrichtung nach einem der vorhergehenden Ansprüche,
**dadurch gekennzeichnet,**
**daß** die Steuer-Module (12) einen im wesentlichen identischen Aufbau aufweisen.

## Claims

1. Electrical control device for generating control signals for driving electrical devices,
- the control device containing a multiplicity of control modules (12), each of which can drive one of the electrical devices to be driven by the control device, and
- a setting device (13) being provided, which setting device sets, by outputting corresponding control data,
- which electrical device is driven by which control module, and
- whether and, if appropriate, which control modules for driving a respective electrical device cooperate in which manner,
**characterized in that**
- the control device is part of an integrated circuit, and
- **in that** the control modules (12) are multifunctional modules which can selectively operate independently of one another in one of a plurality of operating modes, the plurality of operating modes comprising an operating mode in which the control modules are used as counters and/or an operating mode in which the control modules (12) are used as comparators and/or an operating mode in which the control modules (12) are used as edge detectors and/or an operating mode in which the control modules (12) are used as a capture unit.

2. Control device according to Claim 1,
**characterized in that**
the control modules (12) are designed to react in a predetermined manner in response to particular events and to output data or signals representing the reaction from the control device to other control modules and/or as a control signal for driving an electrical device.

3. Control device according to one of the preceding claims,
**characterized in that**
the control device has a multiplicity of input and/or output connections, and **in that** the setting device (13) can set which control modules are connected to which input and/or output connections (11).

4. Control device according to one of the preceding claims,
**characterized in that**
the setting device (13) is designed to make the settings individually during operation of the control device.

5. Control device according to one of the preceding claims,
**characterized in that**
the control modules (12) are connected in series to form a control module row.

6. Control device according to Claim 5,
**characterized in that**
the control modules (12) are designed to supply data or signals to that control module (12) which is respectively in front of them in the control module row and/or to that control module which is respectively behind them in the control module row.

7. Control device according to one of the preceding claims,
**characterized in that**
the control modules (12) are designed to forward data or signals received from one control module to other control modules.

8. Control device according to one of the preceding claims,
**characterized in that**
the control modules (12) have an essentially identical design.

## Revendications

1. Dispositif de commande électrique permettant d'émettre des signaux de commande pour commander des dispositifs électriques ;
- le dispositif de commande contenant une pluralité de modules de commande (12) pouvant chacun commander les dispositifs électriques commandés par le dispositif de commande ; et
- un dispositif de réglage (13) étant prévu pour régler la transmission des données de commande correspondantes ;
- ledit dispositif électrique étant commandé par ledit module de commande ; et
- les modules de commande collaborant pour commander un dispositif électrique respectif étant définis le cas échéant ;
**caractérisé en ce que** :
- le dispositif de commande fait partie intégrante d'un circuit intégré ;
- les modules de commande (12) sont des modules multifonctionnels pouvant fonctionner indépendamment les uns des autres au choix selon un ou plusieurs modes, les différents modes comprenant un mode selon lequel les modules de commande sont utilisés comme des compteurs et/ou un mode selon lequel les modules de commande (12) sont utilisés comme des comparateurs et/ou un mode selon lequel les modules de commande (12) sont utilisés comme des détecteurs de côté et/ou un mode selon lequel les modules de commande (12) sont utilisés comme des unités de prise d'image.

2. Dispositif de commande selon la revendication 1, **caractérisé en ce que** les modules de commande (12) sont conçus pour réagir de façon prédéfinie à des événements prédéfinis et pour envoyer à d'autres modules de commande, à partir du dispositif de commande, des données ou des signaux correspondant à la réaction et/ou pour les envoyer sous la forme d'un signal de commande permettant de commander un dispositif électrique.

3. Dispositif de commande selon l'une quelconque des revendications précédentes, **caractérisé en ce que** le dispositif de commande comporte une pluralité de bornes d'entrée et/ou de sortie pouvant être réglées par le dispositif de réglage (13), lesdits modules de commande étant reliés auxdites bornes d'entrée et/ou de sortie (11).

4. Dispositif de commande selon l'une quelconque des revendications précédentes, **caractérisé en ce que** le dispositif de réglage (13) est conçu pour réaliser individuellement des réglages pendant que le dispositif de commande est en état de fonctionnement.

5. Dispositif de commande selon l'une quelconque des revendications précédentes, **caractérisé en ce que** les modules de commande (12) sont branchés en série à une série de modules de commande.

6. Dispositif de commande selon la revendication 5, **caractérisé en ce que** les modules de commande (12) sont conçus pour envoyer des données ou des signaux aux modules de commande (12) respectivement placés devant eux dans la série de modules de commande et/ou aux modules de commande placés respectivement derrière eux dans la série de modules de commande.

7. Dispositif de commande selon l'une quelconque des revendications précédentes, **caractérisé en ce que** les modules de commande (12) sont conçus pour transmettre à d'autres modules de commande les données ou signaux obtenus d'autres modules de commande.

8. Dispositif de commande selon l'une quelconque des revendications précédentes, **caractérisé en ce que** les modules de commande (12) présentent une structure pour l'essentiel identique.
